Europäisches Patentamt

European Patent Office

Office européen des brevets

(11) Veröffentlichungsnummer: **0 388 499**

**A1**

(12) **EUROPÄISCHE PATENTANMELDUNG**

(21) Anmeldenummer: **89105276.3**

(51) Int. Cl.5: **G01C 19/72**

(22) Anmeldetag: **23.03.89**

(43) Veröffentlichungstag der Anmeldung:
**26.09.90 Patentblatt 90/39**

(84) Benannte Vertragsstaaten:
**CH DE FR GB IT LI NL SE**

(71) Anmelder: **LITEF GmbH**
**Lörracher Strasse 18**
**D-7800 Freiburg/Br.(DE)**

(72) Erfinder: **Schröder, Werner, Prof. Dr.**
**Vogtstrasse 5**
**D-7834 Herbolzheim 3(DE)**

(74) Vertreter: **TER MEER - MÜLLER -**
**STEINMEISTER & PARTNER**
**Mauerkircherstrasse 45**
**D-8000 München 80(DE)**

(54) **Drehratensensoranordnung mit faseroptischen Sagnacinterferometern für drei Raumrichtungen.**

(57) Bei der Drehratensensoranordnung mit faseroptischen Sagnacinterferometern für drei Raumrichtungen und gemeinsamer Ausleseoptik werden drei Faser-Sensorspulen ($8_1$, $8_2$, $8_3$) für die drei Raumachsen von einem Strahlteileraufbau (3 bis 7) aus insgesamt fünf Strahlteilern mit in den Faserspulen gegenläufig umlaufenden Monomode-Lichtern gespeist. Die jeweils einer Sensorspule zugeordneten Modulatoren ($9_1$, $9_2$, $9_3$) werden bei verschiedenen Frequenzen betrieben, so daß eine elektronische Trennung der drei über einen Detektor (11) auslesbaren Drehratensignale in der elektronischen Signalverarbeitung möglich wird bei üblicher Signalauswertung. Für die drei Kreiselachsen wird nur ein gemeinsames Modenfilter (2), eine Lichtquelle (1) und nur ein Detektor (11) benötigt. Unter der Voraussetzung, daß die Zuverlässigkeit eines Faserkreisels im wesentlichen durch die mögliche Ausfallrate der Lichtquelle (1) bestimmt ist, ist die Wahrscheinlichkeit des Ausfalls des Gesamtsystems dreifach geringer als bei drei Lichtquellen, wie sie bei bisher üblichen, individuell aufgebauten Drehratensensoranordnungen erforderlich sind. Der technische Aufwand und die Fertigungskosten werden deutlich geringer.

zur Auswerteelektronik    von Auswerteelektronik

**Fig. 1**

## Drehratensensoranordnung mit faseroptischen Sagnacinterferometern für drei Raumrichtungen

Erfindungsgegenstand ist eine Drehratensensoranordnung mit faseroptischen Sagnacinterferometern für drei Raumrichtungen.

Um Drehungen in drei Raumachsen in einem Fahrzeug, z. B. einem Fluggerät, messen zu können, werden mindestens zwei zweiachsige oder drei einachsige Kreisel und insbesondere im Falle der Drehratenmessung mit faseroptischen Sagnacinterferometern drei unabhängige Drehratensensoren benötigt, bei dabei redundanten Systemen auch mehr. Die Kreisel befinden sich im allgemeinen auf einem Sensorblock in fester Winkelposition zueinander. Solche faseroptischen Drehratensensoren können auf dem Prinzip des passiven optischen Resonators oder des Interferometers basieren. Beispiele für die möglichen Ausführungsformen finden sich in den Patentschriften EP-B1-0 254 756 (Verfahren zur Drehratenmessung mittels eines passiven optischen Resonators) und EP-B1-160 450 (Phase Reading Fiber Optic Interferometer).

Es besteht ein Bedarf, die vergleichsweise teuren inertialen Sensorsysteme zu vereinfachen und den zur Herstellung benötigten Aufwand zu verringern, ohne die erforderliche Genauigkeit wesentlich zu vermindern und Funktionssicherheit zu beeinträchtigen.

Zur Senkung des technischen Aufwands, der Material- und Fertigungskosten bei gleichzeitiger Erhöhung der Zuverlässigkeit einer Drehratensensoranordnung mit faseroptischen Sagnacinterferometern für drei Raumrichtungen wird erfindungsgemäß vorgeschlagen
- den Lichtstrahl einer Lichtquelle nach Durchlaufen eines Modenfilters in einer Strahlteilereinrichtung in sechs Teillichtstrahlen aufzuteilen, die paarweise in entgegengesetzter Richtung in drei in den drei Raumachsen ausgerichtete Faserspulen eingestrahlt werden,
- drei auf unterschiedliche Modulationsfrequenzen abgestimmte Phasenmodulatoren zu verwenden, von denen jeweils einer einer der Faserspulen zugeordnet ist und die jeweils zwei in die betreffende Faserspule eingestrahlten Teillichtstrahlen zu modulieren und
- einen über einen Lichtkoppler zwischen der Lichtquelle und dem Modenfilter über eine optische Abzweigung angeschlossenen Detektor mit nachgeschalteter Auswerteschaltung zu verwenden, welche das optische Signal entsprechend der Modulationsfrequenzen und ihrer Oberwellen den einzelnen Kreiselachsen zuordnet und nach Drehachsen getrennt verarbeitet und als Maß für die jeweilige raumrichtungsbezogene Drehrate auswertet.

Vorteilhafte Ergänzungen und Weiterbildungen dieses Grundgedankens der Erfindung sind in abhängigen Patentansprüchen gekennzeichnet sowie in der nachfolgenden Beschreibung er gänzt und weiter erläutert.

Bei der Erfindung ist der Gesamtaufwand dadurch deutlich vermindert, daß lediglich eine Lichtquelle, ein Modenfilter und eine Photodetektoranordnung benötigt werden und die erforderliche Strahlteilervorrichtung als ein einzelner Block, z. B. auch in integrierter Optik oder in Fasertechnik, gefertigt werden kann. Gegenüber einem nicht-redundanten dreiachsigen Faserkreiselsystem wird die Zuverlässigkeit um den Faktor "3" erhöht, wenn - wie in der Regel zutreffend - angenommen wird, daß die Zuverlässigkeit eines Faserkreisels im wesentlichen durch die Zuverlässigkeit der Lichtquelle bestimmt ist. Zudem kann die (gemeinsame) Lichtquelle redundant ausgelegt sein, indem über einen weiteren Strahlteiler zwischen erster Lichtquelle und der Abzweigung zum Detektor bei Bedarf das Licht einer zweiten, die erste bei deren Ausfall ersetzenden Lichtquelle eingekoppelt werden kann.

Die Erfindung und vorteilhafte Einzelheiten werden nachfolgend unter Bezug auf die Zeichnung in beispielsweiser Ausführungsform näher erläutert. Es zeigen:

Fig. 1 die Prinzipanordnung einer Drehratensensoranordnung für die drei Raumrichtungen gemäß der Erfindung, die auch als Sensortriade bezeichnet werden kann;

Fig. 2 die schematische räumliche Anordnung eines Sensorblocks mit faseroptischer Drehratensensor-Triade erfindungsgemäßer Art;

Fig. 3 eine Signalverarbeitung für drei Raumrichtungen, die unabhängig von der gewählten Signalverarbeitungstechnik (rückgestellt oder nicht rückgestellt) der Einzelkreisel erlaubt, die Auslesesi gnale der einzelnen Spulen voneinander zu trennen; und

Fig. 4a und 4b Alternativen zur Herstellung der Hauptstrahlteiler in Mikrooptik.

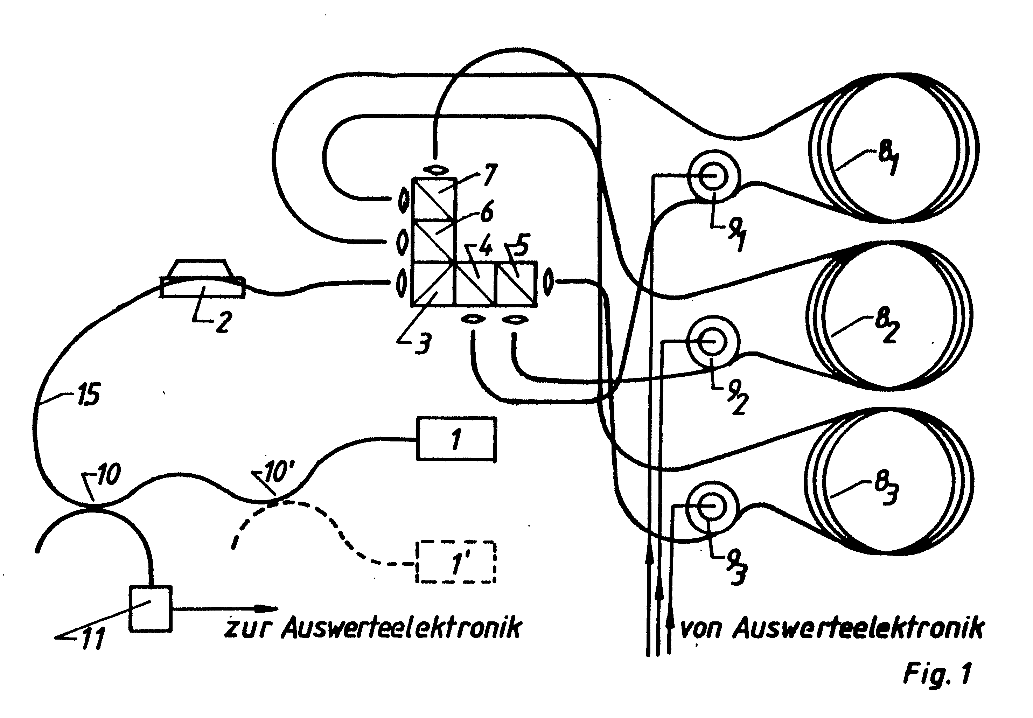

Die in Fig. 1 ohne die notwendige und zugehörige Erreger-, Regel- und Auswerteelektronik hinsichtlich ihres prinzipiellen Aufbaus dargestellte FOG-Triade (FOG = Fibre Optic Gyro) weist eine Lichtquelle 1 auf, die bei Sagnacinterferometern im allgemeinen breitbandig (Superlumineszenzdiode) ist und bei passiven Sagnacresonatoren gemäß Patentschrift EP-B1-0 254 756 schmal- oder breitbanding sein kann und deren Licht über eine Lichtleitfaser 15 zunächst auf ein Modenfilter 2 bekannter Bauart gelangt, dessen Monomodeausgangslicht in einem ersten Strahlteiler 3 in zwei Teillichtstrahlen aufgeteilt wird, die jeweils mittels zweier nachfolgend angeordneter zweiter und dritter Strahlteiler 4, 5 bzw. vierter und fünfter Strahlteiler 6, 7 in insgesamt **sechs** Teillichtstrahlen aufgeteilt werden. Der von dem zweiten Strahlteiler 4 bzw. die von dem dritten Strahlteiler 5 ausgehenden, insgesamt drei Teillichtstrahlen werden in bekannter Weise in das eine Ende jeweils einer ersten Sensorspule $8_1$ bzw. zweiten Sensorspule $8_2$ bzw. dritten Sensorspule $8_3$ eingestrahlt. Ganz entsprechend wird der am vierten Strahlteiler 6 bzw. werden die am fünften Strahlteiler 7 austretenden Teillichtstrahlen in Gegenrichtung, d. h. vom anderen Ende aus, in die Sensorspulen $8_1$, $8_2$ bzw. $8_3$ eingestrahlt. Die Faseranschlüsse können natürlich auch in einer anderen sinnvollen Reihenfolge erfolgen.

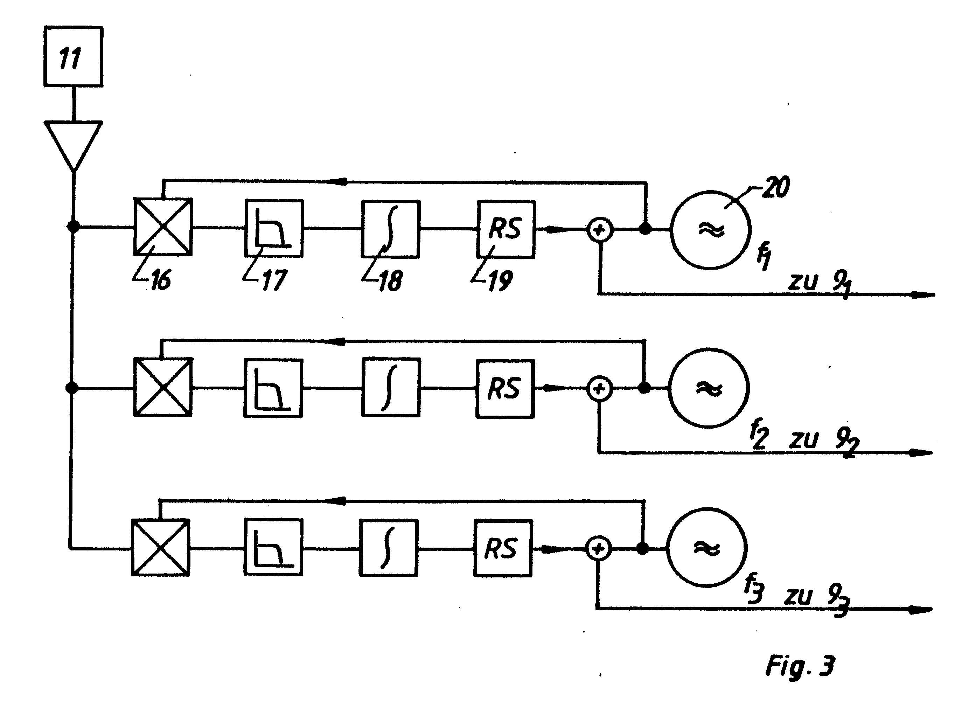

Die Sensorspulen $8_1$, $8_2$ und $8_3$ sind in bekannter Weise in den drei Raumachsen ausgerichtet, ganz entsprechend einer Anordnung, wie sie bei drei Einzelsystemen üblich ist. Der jeweils eine, die jeweilige Sensorspule beaufschlagende Teillichtstrahl wird in ebenfalls prinzipiell bekannter Weise durch einen Modulator, insbesondere einen Piezomodulator $9_1$, $9_2$ bzw. $9_3$ moduliert. Die Modulatoren $9_1$, $9_2$ bzw. $9_3$ werden bei verschiedenen, vorzugsweise in Abstimmung auf die jeweilige Faserlänge der Sensorspule $8_1$, $8_2$ bzw. $8_3$ abgestimmten Frequenzen betr eben, um eine elektronische Trennung der Drehratensignale in der Auswerteelektronik (Fig. 3) in prinzipiell bekannter Weise zu ermöglichen.

Die von den Sensorspulen $8_1$, $8_2$, $8_3$ zurücklaufenden Teillichtstrahlen durchlaufen wiederum die Anordnung der Strahlteiler 3 bis 7, das Modenfilter 2 und gelangen beispielsweise über einen Faserrichtkoppler 10 auf die Detektoranordnung 11, deren elektrisches Ausgangssignal die elektronische Signalverarbeitung beaufschlagt.

Aus theoretischen Überlegungen, die in einer experimentellen Anordnung mit in der nachfolgenden Tabelle aufgeführten Daten verwirklicht wurde, ließen sich folgende charakteristische Eigenschaften der erfindungsgemäßen FOG-Triade ableiten:

Tabelle

| Kreiselachse | Faserlänge | Mittlerer Spulendurchmesser | Modulationsfrequenz |
|---|---|---|---|
| $8_1$ | 500 m | 64 mm | 205 kHz |
| $8_2$ | 400 m | 64 mm | 256 kHz |
| $8_3$ | 600 m | 64 mm | 170 kHz |

Die Biasstabilität in Abhängigkeit von der Temperatur ergab einen Wert von 0,1 °/h ($\hat{=}$ 1σ).

Das Rauschen des Ausgangssignals (random walk) betrug etwa 0,05 °/h$^{\frac{1}{2}}$. Es ist mehr als dreimal höher als bei einem Einzelkreisel, da eine Lichtleistungsverringerung um minimal den Faktor "9" pro Kreiselachse (gleiche Intensität pro Kreiselachse vorausgesetzt) durch die vier zusätzlichen Koppler auftritt.

Für die Skalenfaktorstabilität und die Wiederholbarkeit waren die Werte ähnlich bisher bekannten einachsigen Kreiseln dieser Art.

Der Fig. 1 ist auch die mögliche Einfügung einer Ersatzlichtquelle 1' zu entnehmen, die über einen weiteren Koppler 10' an die Interferometer angeschlossen ist. Bei Ausfall der Lichtquelle 1 oder zum Vergleich der Kreiseldaten bei wechselweisem Betrieb der beiden Lichtquellen 1, 1' - (Skalenfaktorfehlererkennung) kann die Ersatzlichtquelle 1' verwendet werden. Die Zuverlässigkeit des Gesamtsystems erhöht sich dadurch signifikant.

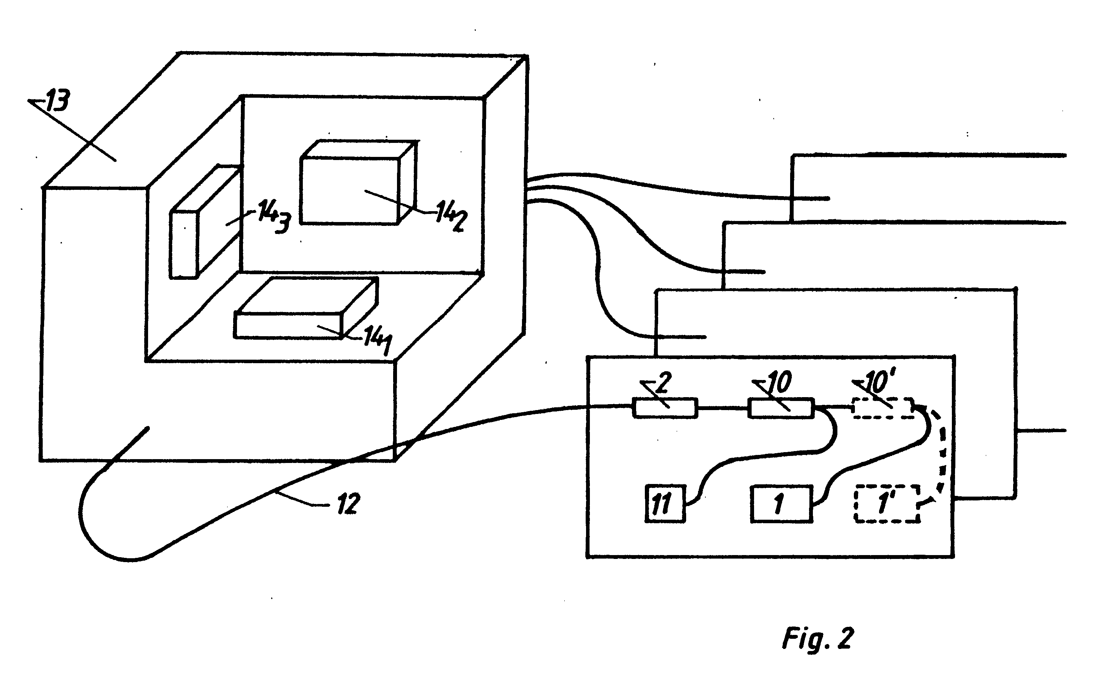

Die schematische Perspektivdarstellung der Fig. 2 zeigt, wie eine FOG-Triade erfindungsgemäßer Art in einem Gehäuse als Sensorblock 13 ausgebildet werden kann, der gleichzeitig die für ein dreiachsiges Strapdown-System erforderlichen drei Beschleunigungsmesser $14_1$, $14_2$ und $14_3$ aufnimmt.

Beispielhaft sind die Lichtquelle 1 (bzw. 1'), der Auslesekoppler 10, der Detektor 11 und der Polarisator 2 auf einer Elektronikkarte untergebracht. Die Elektronik für die Kreiselanregung und für die Detektorsignalverarbeitung ist auf getrennten Karten aufgebaut, eine für jede Kreiselachse.

Fig. 3 zeigt schematisch und beispielhaft eine mögliche Ausführungsform der Auswerteelektronik für drei Kreiselachsen. Das Signal des Detektors 11 wird in einem Multiplizierer 16 mit der Modulationsfrequenz f multipliziert, so daß der zur Modulationsfrequenz synchrone Signalanteil als DCAusgangswert des Multiplizierers 16 (Demodulators) auftritt. Um die gleichzeitig auftretenden harmonischen Signale der Modulationsfrequenz zu unterdrücken, wird das Signal mit einem Tiefpaß 17 gefiltert. Das Signal am Ausgang des Tiefpasses 17 ist in erster Näherung proportional zur optischen Phasendifferenz im zugehörigen Sagnacinterferometer. Ein Regler 18 verarbeitet dieses Signal und steuert einen Rückstellsignalgeber 19 so, daß der Kreisel zurückgestellt wird und das Ausgangssignal von 17 im wesentlichen Null wird.

Gleichzeitig wird auf den Kreisel das Modulationssignal aus einem Frequenzgenerator 20 gegeben. Das Signal des Rückstellsignalgebers 19 wird als Ausgangssignal der entsprechenden Kreiselachse benutzt.

Wesentlich ist, daß die Modulationsfrequenzen der drei Kreiselachsen nicht nahe beieinander liegen, d. h. daß die Frequenzen einen Abstand von mehr als der doppelten Bandbreite der Tiefpaßfilter 17 zueinander haben. Die Bandbreite der Tiefpaßfilter 17 braucht im allgemeinen nicht größer als einige Kilohertz zu sein. Diese Forderung ist für Faserkreisel mit ihrer relativ hohen optimalen Betriebsfrequenz leicht zu erfüllen. Zudem sollten die Frequenzen inkommensurabel sein oder zumindest sollte die Frequenz des kleinsten gemeinsamen Vielfachen der drei Betriebsfrequenzen sehr hoch liegen, um eine gegenseitige Beeinflussung der Drehratensensorkanäle zu vermeiden.

Im Umfang der Erfindung ist eingeschlossen, daß die Kreiselachsen auch "open-loop", also nicht-rückgestellt, nach demselben Prinzip betrieben werden können.

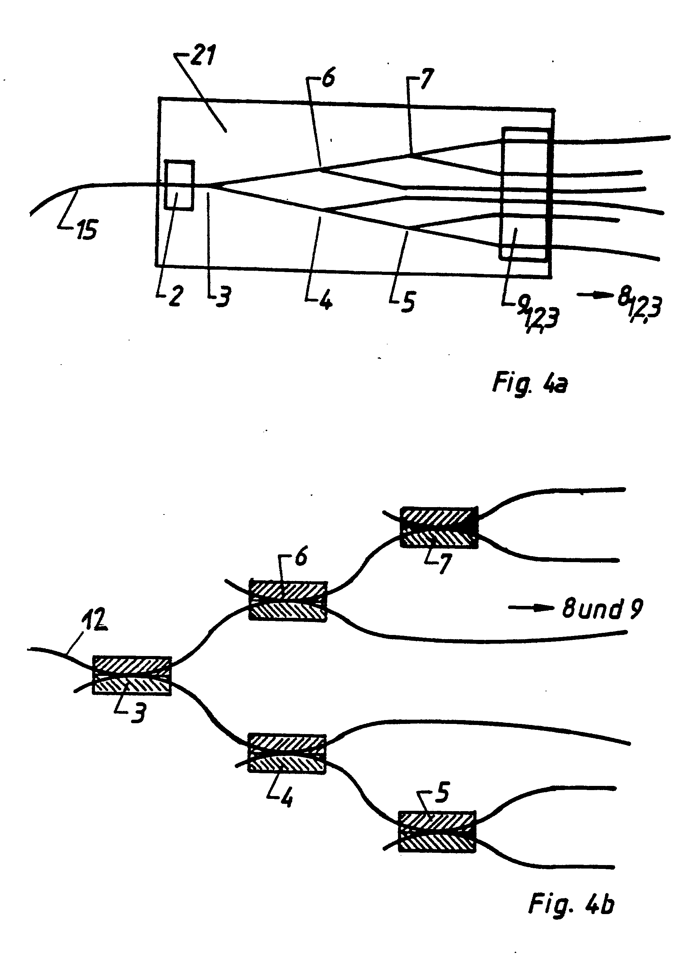

Fig. 4 zeigt zwei weitere Ausführungsformen des Strahlteilerblocks 3 bis 7; Fig. 4a in integrierter Optik mit Y-Strahlteiler und Fig. 4b mit fünf faseroptischen Strahlteilern. In Fig. 4a sind auf dem integrierten Optikchip außerdem der Polarisator 2 und die Phasenmodulatoren 9 mit untergebracht. Wie diese Bauteile in integrierter Optik hergestellt werden, ist dem Fachmann geläufig.


**Ansprüche**

1. Drehratensensoranordnung mit faseroptischen Sagnacinterferometern für drei Raumrichtungen, **gekennzeichnet durch**
- eine Lichtquelle (1), deren Lichtstrahl nach Durchlaufen eines Modenfilters (2) in einer Strahlteilereinrichtung (3 bis 7) in sechs Teillichtstrahlen aufgeteilt wird, die paarweise in entgegengesetzter Richtung in drei in den drei Raumachsen ausgerichtete Faserspulen ($8_1$, $8_2$, $8_3$) eingestrahlt werden,
- drei auf unterschiedliche Modulationsfrequenzen abgestimmte Phasenmodulatoren ($9_1$, $9_2$, $9_3$), von denen jeweils einer einer der Faserspulen ($8_1$, $8_2$ bzw. $8_3$) zugeordnet ist und jeweils zwei der in die betreffende Faserspule eingestrahlten Lichtstrahlen moduliert, und durch
- einen über einen Lichtkoppler (10) zwischen der Lichtquelle (1) und dem Modenfilter (2) angeschlossenen Detektor (11), welcher die Differenzfrequenzen der jeweiligen in den drei Ringresonatoren ($8_1$, $8_2$, $8_3$) in entgegengesetzter Richtung umlaufenden Teillichtstrahlen nach frequenzmäßiger Trennung aufgrund der unterschiedlichen Modulationsfrequenzen als Maß für die jeweilige raumrichtungsbezogene Drehrate auswertet.

2. Drehratensensoranordnung nach Anspruch 1, **dadurch gekennzeichnet,** daß die Strahlteilereinrichtung
- einen ersten Strahlteiler (3), der den von der Lichtquelle (1) stammenden, über das Modenfilter (2) eingespeisten Lichtstrahl in zwei Teillichtstrahlen aufteilt,
- einen zweiten (4) und einen dritten (5) Strahlteiler, die den einen vom ersten Strahlteiler (3) ausgehenden Teillichtstrahl in den ersten und nachfolgend in den zweiten und dritten Teillichtstrahl aufteilen und
- einen vierten (6) und einen fünften (7) Strahlteiler auf weist, die den anderen vom ersten Strahlteiler (3) ausgehenden Teillichtstrahl in den vierten und nachfolgend in den fünften und sechsten Teillichtstrahl aufteilen.

3. Drehratensensoranordnung nach Anspruch 2, **dadurch gekennzeichnet,** daß die Strahlteileranordnung (3 bis 7) als integrierte Baueinheit derart ausgebildet ist, daß der dritte und der vierte Strahlteiler (4, 5) unmittelbar in Reihe an die Strahlaustrittsfläche des ersten Strahlteilers (3) für den einen und der fünfte und sechste Strahlteiler (6, 7) unmittelbar in Reihe an die Strahlaustrittsfläche des ersten Strahlteilers (3) für den anderen Teillichtstrahl angesetzt sind.

4. Drehratensensoranordnung nach Anspruch 2, **dadurch gekennzeichnet,** daß die Strahlteileranordnung (3 bis 7) in integrierter Optik hergestellt ist.

5. Drehratensensoranordnung nach Anspruch 2 und 4, **dadurch gekennzeichnet,** daß die integrierte Optik zusätzlich noch den Polarisator (2) und/oder die Phasenmodulatoren ($9_1$, $9_2$, $9_3$) enthält.

6. Drehratensensoranordnung nach Anspruch 2, **dadurch gekennzeichnet,** daß die Strahlteiler als Faserkoppler ausgebildet sind.

7. Drehratensensoranordnung nach Anspruch 1, **dadurch gekennzeichnet,** daß die Phasenmodulatoren ($9_1$, $9_2$, $9_3$) Piezomodulatoren sind.

8. Drehratensensoranordnung nach Anspruch 2, **dadurch gekennzeichnet,** daß die Phasenmodulatoren ($9_1$, $9_2$, $9_3$) in integrierter Optik hergestellt sind.

9. Drehratensensoranordnung nach Anspruch 1, **dadurch gekennzeichnet,** daß die Faserspulen ($8_1$, $8_2$, $8_3$) unterschiedliche Faserlängen aufweisen und daß die Modulationsfrequenz auf die unterschiedlichen Faserlängen abgestimmt sind.

10. Drehratensensoranordnung nach einem der vorhergehenden Ansprüche, **dadurch gekennzeichnet,** daß das Licht einer Ersatzlichtquelle (1') über einen Koppler (10') auf die zu einem Polarisator (2) bzw. zu den Strahlteilern (3 bis 7) führende Lichtleitfaser (15) einkoppelbar ist.

11. Drehratensensoranordnung nach Anspruch 10, **dadurch gekennzeichnet,** daß die Lichtquelle (1) und die Ersatzlichtquelle (1') zum Vergleich der Kreiseldaten, z. B. zur Skalenfaktorerkennung, wechselweise erregbar sind.

zur Auswerteelektronik

von Auswerteelektronik

EP 0 388 499 A1

Fig. 1

Fig. 2

EP 0 388 499 A1

f₁ zu g₁

f₂ zu g₂

f₃ zu g₃

20

RS 19

18

17

16

11

Fig. 3

Fig. 4a

Fig. 4b

Europäisches
Patentamt

**EUROPÄISCHER RECHERCHENBERICHT**

Nummer der Anmeldung

EP 89 10 5276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN, Band 11, Nr. 137 (P-572)[2584], 2. Mai 1987; & JP-A-61 277 013 (SUMITOMO ELECTRIC IND LTD) 08-12-1986 * Insgesamt * --- | 1-3 | G 01 C 19/72 |
| X | PATENT ABSTRACTS OF JAPAN, Band 9, Nr. 97 (P-352)[1820], 26. April 1985; & JP-A-59 224 511 (SUMITOMO DENKI KOGYO K.K.) 17-12-1984 * Insgesamt * --- | 1-3 | |
| A | DE-A-2 941 618 (RUSSER) * Figur 15; Seite 19, Zeile 19 – Seite 20, Zeile 2; Ansprüche 1,14 * --- | 1 | |
| A | DE-A-3 235 401 (MARTEN et al.) * Insgesamt * ----- | 1 | |
| | | | **RECHERCHIERTE SACHGEBIETE (Int. Cl.5)** |
| | | | G 01 C |

Der vorliegende Recherchenbericht wurde für alle Patentansprüche erstellt

| Recherchenort | Abschlußdatum der Recherche | Prüfer |
|---|---|---|
| DEN HAAG | 09-11-1989 | KOLBE W.H. |